# NEUE EUROPÄISCHE PATENTSCHRIFT

(11) **EP 3 010 772 B2**
(45) Veröffentlichungstag und Bekanntmachung des Hinweises auf die Entscheidung über den Einspruch: **28.08.2024**
(45) Hinweis auf die Patenterteilung: 06.09.2017
(21) Anmeldenummer: 13730546.2
(22) Anmeldetag: 19.06.2013
(51) Int. Cl.: B60T 13/68, B60T 7/20, B60T 13/26, B60T 15/04

(54) **STEUEREINRICHTUNG ZUR STEUERUNG DER BREMSEN EINER ZUGFAHRZEUG-ANHÄNGERKOMBINATION**
CONTROL DEVICE FOR CONTROLLING THE BRAKES OF A TOWING VEHICLE/TRAILER COMBINATION
DISPOSITIF DE COMMANDE PERMETTANT DE COMMANDER LES FREINS D'UNE COMBINAISON ENTRE UN VÉHICULE TRACTEUR ET UNE REMORQUE

(43) Veröffentlichungstag der Anmeldung: 27.04.2016
(73) Patentinhaber: KNORR-BREMSE Systeme für Nutzfahrzeuge GmbH, 80809 München (DE)
(72) Erfinder: NEMETH, Huba, 1116 Budapest (HU); TÖREKI, Gabor, 2030 Erd (HU); JUHASZ, Arpad, 2461 Tarnok (HU)
(74) Vertreter: DTS Patent- und Rechtsanwälte PartmbB
(86) Internationale Anmeldenummer: PCT/EP2013/062734
(87) Internationale Veröffentlichungsnummer: WO 2014/202131

(56) Entgegenhaltungen:
- EP-A1- 1 504 975
- EP-A1- 2 133 250
- EP-A2- 1 509 434
- WO-A1-2010/031563
- WO-A2-2008/113591
- DE-A1- 102007 052 521
- DE-B3- 102008 007 877

## Beschreibung

### Stand der Technik

Die vorliegende Erfindung betrifft eine Steuereinrichtung zur Steuerung zumindest der wenigstens einen Federspeicherbremszylinder umfassenden Feststellbremse eines Zugfahrzeugs einer Zugfahrzeug-Anhängerkombination und zur Steuerung der Betriebsbremse eines Anhängers der Zugfahrzeug-Anhängerkombination, gemäß dem Oberbegriff von Anspruch 1.

Üblicherweise werden bei Nutzfahrzeugen als Bremsaktuatoren sog. Kombibremszylinder verwendet, bei welchen an einen als aktive Betriebsbremse ausgestalteten Betriebsbremszylinder ein als passive Bremse ausgestalteter Federspeicherbremszylinder angekoppelt ist. In dem Betriebsbremszylinder ist ein durch ein Druckmittel betätigbarer Betriebsbremskolben längsverschieblich geführt, welcher eine Betriebsbremskammer begrenzt und mit einer auf Bremsbetätigungselemente einwirkenden Betriebsbrems-Kolbenstange verbunden ist. Demgegenüber ist in dem Federspeicherbremszylinder ein durch eine Speicherfeder betätigbarer Federspeicherbremskolben längsverschieblich geführt, welcher auf der einen Seite von einer Federspeicherbremskammer und auf der entgegengesetzten Seite eine die Speicherfeder aufnehmende Federkammer begrenzt wird. Eine Druckbeaufschlagung der Betriebsbremskammer führt zu einem Zuspannen der Betriebsbremse, eine Druckbeaufschlagung der Federspeicherbremskammer dagegen zu einem Lösen der Federspeicherbremse. Umgekehrt führt eine Druckabsenkung in der Betriebsbremskammer zu einem Lösen der Betriebsbremse, eine Druckabsenkung in der Federspeicherbremskammer dagegen zu einem Zuspannen der Federspeicherbremse. Ein solcher Kombizylinder ist beispielsweise in der DE 29 23 359 C2 beschrieben.

Eine gattungsgemäße Steuereinrichtung ist beispielsweise aus der DE 10 2007 052 521 A1 bekannt, welche als Feststellbremsmodul ausgeführt ist. Das im Zugfahrzeug angeordnete Feststellbremsmodul steuert über ein Anhängersteuerventil die als aktive Betriebsbremszylinder ausgeführten Betriebsbremsen des Anhängers sowie die als passive Federspeicherbremsen ausgeführten Feststellbremsen des Zugfahrzeugs an, wobei die Federspeicherbremsen des Zugfahrzeugs jeweils Teil eines oben beschriebenen Kombizylinders sind, welcher zudem auch noch aktive Betriebsbremszylinder beinhaltet.

Nach der geltenden Gesetzeslage kann bei geparkten oder abgestellten Zustand einer Zugfahrzeug-Anhängerkombination, d.h. bei zugespannter Feststellbremse des Zugfahrzeugs zusätzlich die Betriebsbremse des Anhängers zugespannt sein, erforderlich ist dies jedoch nicht. Folglich bleibt es dem Anwender überlassen, ob im geparkten oder abgestellten Zustand des an ein Zugfahrzeug angekuppelten Anhängers zusätzlich auch dessen Betriebsbremsen zugespannt werden oder ob diese gelöst bleiben. Um diesbezüglich unterschiedlichen Kundenwünschen Rechnung tragen zu können, werden gemäß der gattungsbildenden DE 10 2007 052 521 A1 beide Funktionalitäten des Anhängers realisiert, d.h. Parken mit gelöster Betriebsbremse oder mit zugespannter Betriebsbremse. Aus diesem Grund sind bei der Steuereinrichtung bzw. bei dem Feststellbremsmodul der eine Anschluss und der andere Anschluss vorhanden, welche beim Parken oder im Parkzustand gegenläufig belüftet werden.

Bei diesem Stand der Technik ist zwischen den Auslass des Bistabilventils und den Steuereingang der der luftmengenverstärkenden Ventileinrichtung (Relaisventils) ein 2/2-Wegemagnetventil geschaltet. Dieses 2/2-Wege-Magnetventil wird im Rahmen einer Testfunktion oder eines Testszustands der Zugfahrzeug-Anhängerkombination, bei dem in dem überprüft wird, ob die Zugfahrzeug-Anhängerkombination bei über die Feststellbremse eingebremstem Zugfahrzeug und bei ungebremsten Anhänger im eingebremsten Zustand gehalten werden kann, bestromt und dadurch in einen Sperrzustand geschaltet, in dem eine Belüftung der Federspeicherbremse des Zugfahrzeugs unterbunden wird. Wenn aber die elektronische Ansteuerung dieses 2/2-Wege-Magnetventils oder die Stromversorgung während des Vorliegens des Testzustands gestört ist oder ausfällt, so schaltet das dann unbestromte 2/2-Wegemagnetventil von seiner bestromten Sperrstellung in seine unbestromte Durchlassstellung und belüftet dadurch die Federspeicherbremse des Zugfahrzeugs, welche daraufhin gelöst wird, so dass die Zugfahrzeug-Anhängerkombination dann gänzlich ungebremst ist. Insbesondere an Hanglagen kann dies gefährlich werden.

Es ist daher Aufgabe der vorliegenden Erfindung eine Steuereinrichtung der eingangs erwähnten Art derart weiterzubilden, dass sie eine höhere Sicherheit gewährleistet.

Diese Aufgabe wird durch die Merkmale von Anspruch 1 gelöst.

### Offenbarung der Erfindung

Gemäß der Erfindung ist vorgesehen, dass der Auslass des Bistabilventils direkt und stets mit dem Steuereingang der luftmengenverstärkenden Ventileinrichtung verbunden ist. Unter einer solchen direkten Verbindung soll insbesondere eine Verbindung ohne Zwischenordnung weiterer Ventile verstanden werden. Dann kann die auch bei einem Stromausfall stabile Ansteuerung der luftmengenverstärkenden Ventileinrichtung durch das Bistabilventil nicht mehr durch dann Fehlfunktionen unterliegenden, elektromagnetischen Ventile beeinflusst werden.

Ein solches bistabiles Ventil oder Bistabilventil, welches üblicherweise als ein von zwei Elektromagneten betätigtes elektromagnetisches Ventil ausgebildet ist, wovon ein Elektromagnet das bistabile Ventil bei Bestromung in die eine Schaltstellung und der andere Elektromagnet das bistabile Ventil bei Bestromung in die andere Schaltstellung schaltet, hat die Eigenschaft, im unbestromten Zustand keine bevorzugte Schaltstellung einzunehmen, sondern die durch entsprechende vorangegangene Bestromung hervorgegangene Schaltstellung beizubehalten. Dadurch wird sichergestellt, dass sich die zuletzt eingenommene Schaltstellung des Bistabilventils auch bei Störung der Stromversorgung oder Steuerungsfehlern nicht verändert.

Weiterhin ist erfindungsgemäß eine von der Steuereinrichtung wenigstens teilweise elektrisch steuerbare Ventileinrichtung vorgesehen, welche derart ausgebildet ist, dass sie den anderen Anschluss mit dem Einlass oder mit dem Auslass des Bistabilventils verbindet, oder mit einer Drucksenke. Mit anderen Worten überbrückt die Ventileinrichtung dann das Bistabilventil.

Aufgrund der Funktionalität der Ventileinrichtung ist die gegenläufige Be- bzw. Entlüftung des einen Anschlusses und des anderen Anschlusses im Parkzustand bzw. die gleichläufige Belüftung des einen Anschlusses und des anderen Anschlusses in vom Parkzustand abweichenden Zuständen wie beispielsweise dem Fahrzustand nach wie vor möglich.

Durch die gegenläufigen Drucksignale an den Anschlüssen für die nachgeordnete Anhängersteuerventileinrichtung kann dann bei geparkter oder abgestellter Zugfahrzeug-Anhängerkombination durch ein- und diesselbe Steuereinrichtung die jeweils gewünschte Funktionalität des Anhängers realisiert werden, also beispielsweise ein Zuspannen der Betriebsbremse des Anhängers, wenn dessen Anhängersteuerventileinrichtung an den einen Anschluss der Steuereinrichtung angeschlossen ist oder ein Lösen oder Gelösthalten der Betriebsbremse des Anhängers, wenn dessen Anhängersteuerventileinrichtung an den anderen Anschluss der Steuereinrichtung angeschlossen ist.

Zu den vom Parkzustand abweichenden Zuständen, welche ebenfalls mit dem erfindungsgemäßen Steuereinrichtung realisierbar sind, zählt neben dem Fahrzustand insbesondere ein Testzustand, in dem überprüft wird, ob die Zugfahrzeug-Anhängerkombination bei über die Feststellbremse eingebremstem Zugfahrzeug und bei ungebremsten Anhänger im eingebremsten Zustand gehalten werden kann.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist eine von der Steuereinrichtung elektrisch steuerbare, dem Bistabilventil vorgeordnete Ventileinrichtung vorgesehen, welche einerseits mit dem Druckluftzufuhranschluss und andererseits mit dem Einlass des Bistabilventils verbunden ist und welche den Einlass des Bistabilventils mit einer Drucksenke oder mit dem Druckluftzufuhranschluss verbindet, oder den Einlass des Bistabilventils des Bistabilventils mit einer Drucksenke oder mit dem Druckluftzufuhranschluss verbindet oder den Einlass gegenüber dem Druckluftzufuhranschluss sperrt. Diese vorgeordnete Ventileinrichtung kann durch ein einzelnes 3/2-Wege-Magnetventil oder alternativ durch zwei 2/2-Wege-Magnetventile gebildet werden.

Dann steuert die Steuereinheit zum Herbeiführen des Fahrzustands
a) die dem Bistabilventil vorgeordnete Ventileinrichtung derart, dass der Einlass des Bistabilventils belüftet ist,
b) das Bistabilventil derart, dass sein Einlass mit seinem Auslass verbunden ist,
c) die Ventileinrichtung derart, dass der andere Anschluss mit dem Auslass des Bistabilventils verbunden ist,
d) um den einen Anschluss und den anderen Anschluss sowie den Arbeitsanschluss zu belüften.

Zusätzlich oder alternativ steuert die Steuereinheit zum Herbeiführen des Parkzustands
a) die dem Bistabilventil vorgeordnete Ventileinrichtung derart, dass der Einlass des Bistabilventils belüftet ist,
b) das Bistabilventil derart, dass sein Auslass mit der Drucksenke verbunden ist,
c) die Ventileinrichtung derart, dass der andere Anschluss mit dem Auslass des Bistabilventils verbunden ist,
d) um den einen Anschluss zu belüften und den anderen Anschluss sowie den Arbeitsanschluss zu entlüften.

Zusätzlich oder alternativ steuert die Steuereinheit zum Herbeiführen des Testzustands,
a) die dem Bistabilventil vorgeordnete Ventileinrichtung derart, dass der Einlass des Bistabilventils belüftet ist,
b) das Bistabilventil derart, dass sein Auslass mit der Drucksenke verbunden ist,
c) die Ventileinrichtung derart, dass der andere Anschluss mit dem Einlass des Bistabilventils verbunden ist,
d) um den einen Anschluss und den anderen Anschluss zu belüften sowie den Arbeitsanschluss zu entlüften.

Die Ventileinrichtung wird bevorzugt durch ein von der Steuereinheit elektrisch steuerbares 3/2-Wege-Magnetventil gebildet, von welchem ein erster Anschluss mit dem Einlass des Bistabilventils und mit dem einen Anschluss, ein zweiter Anschluss mit dem Auslass des Bistabilventils und ein dritter Anschluss mit dem weiteren Anschluss verbunden ist.

Alternativ wird die Ventileinrichtung durch ein von der Steuereinheit elektrisch steuerbares 3/2-Wege-Magnetventil und durch ein Wechselventil gebildet, wobei von dem 3/2-Wege-Magnetventil ein erster Anschluss mit dem Einlass des Bistabilventils und mit dem einen Anschluss, ein zweiter Anschluss mit einer Drucksenke und ein dritter Anschluss mit einem Eingang des Wechselventils verbunden ist, dessen weiterer Eingang mit dem Auslass des Bistabilventils und dessen Ausgang mit dem weiteren Anschluss verbunden ist.

Das Bistabilventil kann elektro-pneumatisch, elektro-hydraulisch, elektro-motorisch oder elektro-magnetisch betätigbar sein, beispielsweise, indem ein Ventilglied des Bistabilventils von einem mit einem Elektromotor zusammen wirkenden Mutter-Spindel-Trieb wie in DE 10 2009 016 981 A1 beschrieben betätigt wird.

Der Auslass des Bistabilventils ist über eine direkte Druckverbindung, insbesondere ohne Zwischenordnung eines oder mehrerer Ventile mit dem Steuereingang der luftmengenverstärkenden Ventileinrichtung verbunden.

Die Steuereinrichtung ist bevorzugt als Baueinheit ausgeführt, in welcher wenigstens die dem Bistabilventil vorgeordnete Ventileinrichtung, das Bistabilventil, die Ventileinrichtung, die luftmengenverstärkende Ventileinrichtung, die Steuereinheit, der Druckluftzufuhranschluss, der eine Anschluss, der andere Anschluss, der Arbeitsanschluss und die Druckverbindung sowie notwendige pneumatische und elektrische Verbindungen dieser Komponenten integriert sind.

Die Erfindung betrifft auch eine elektro-pneumatische Bremseinrichtung eines Zugfahrzeugs einer Zugfahrzeug-Anhängerkombination, welche eine oben beschriebene Steuereinrichtung beinhaltet.

Genaueres wird im Rahmen der folgenden Beschreibung von Ausführungsbeispielen deutlich.

### Zeichnung

Ausführungsbeispiele der Erfindung sind in der Zeichnung dargestellt und in der nachfolgenden Beschreibung näher erläutert. In der Zeichnung zeigt
- Fig.1: einen schematischen Aufbauplan einer Steuereinrichtung gemäß einer bevorzugten Ausführungsform der Erfindung im Fahrzustand;
- Fig.2: einen schematischen Aufbauplan einer Steuereinrichtung gemäß einer weiteren Ausführungsform der Erfindung im Fahrzustand;
- Fig.3: einen schematischen Aufbauplan einer Steuereinrichtung gemäß einer weiteren Ausführungsform im Fahrzustand

### Beschreibung der Ausführungsbeispiele

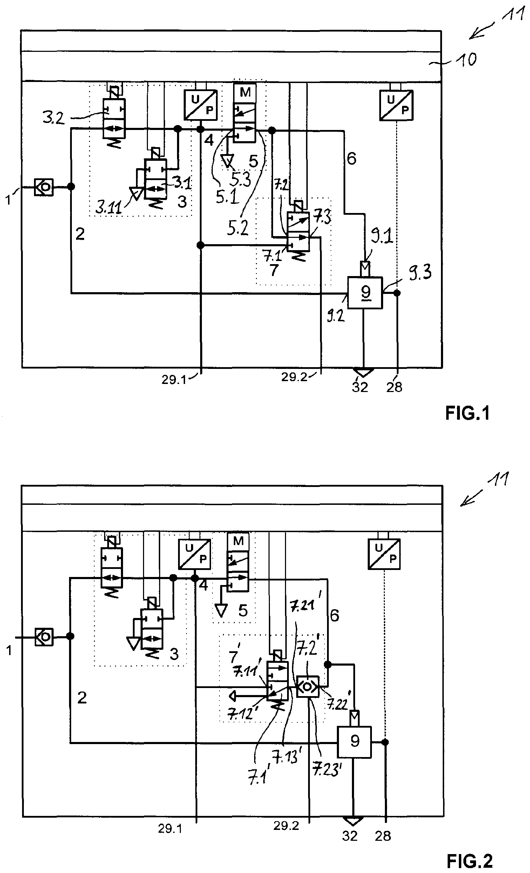

Die in Fig.1 gezeigte bevorzugte Ausführungsform einer hier als Baueinheit oder Modul mit eigenem Gehäuse ausgeführten Steuereinrichtung 11 einer druckmittelbetätigten, beispielsweise pneumatisch betätigten Bremseinrichtung einer Zugfahrzeug-Anhängerkombination ist im Zugfahrzeug angeordnet. Die Bremseinrichtung beinhaltet eine Feststellbremseinrichtung mit einem beispielsweise manuell über einen hier nicht gezeigten Bedienhebel einstellbaren Feststellbremssignalgeber, welcher über eine elektrische Signalleitung durch elektrische Betätigungssignale eine elektronische Steuereinheit 10 der Steuereinrichtung 11 steuert. Die elektronische Steuereinheit 10 ist bevorzugt in die Steuereinrichtung 11 integriert. In die Steuereinrichtung 11 ist weiterhin eine von der Steuereinheit 10 steuerbare Ventileinheit integriert, welche über einen Druckluftzufuhranschluss 1 mit Druckluft aus einem hier nicht gezeigten Vorratsluftbehälter versorgt wird.

Von dem Druckluftzufuhranschluss 1 erstreckt sich eine Vorratsdruckleitung 2 zu einer einem Bistabilventil 5 vorgeordneten Ventileinrichtung 3. Diese Ventileinrichtung 3 beinhaltet bevorzugt, jeweils von der Steuereinheit 10 elektrisch gesteuert, zwei 2/2-Wege-Magnetventile 3.1 und 3.2, über welche ein Einlass 5.1 des Bistabilventils 5 bzw. ein Anschluss 29.1 für ein Anhängersteuerventil des Anhängers entweder mit dem Druckluftzufuhranschluss 1 oder mit einer Drucksenke 3.11 verbindet. Dabei stellt das 2/2-Wege-Magnetventil 3.2 ein Belüftungsventil und das 2/2-Wege-Magnetventil 3.1 ein Entlüftungsventil dar, mit eigener Entlüftung als Drucksenke 3.11. Alternativ könnte die Ventileinrichtung 3 auch durch ein einzelnes 3/2-Wege-Magnetventil gebildet werden.

Das Bistabilventil 5 ist bevorzugt als von der Steuereinheit 10 steuerbares 3/2-Wege-Magnetventil ausgeführt und hat neben dem Einlass 5.1 einen Auslass 5.2 sowie eine Entlüftung als Drucksenke 5.3. Sein Auslass 5.2 ist dabei über eine die Druckverbindung 6 direkt mit einem pneumatischen Steuereingang 9.1 eines Relaisventils 9 verbunden, dessen Einlass 9.2 über die Vorratsdruckleitung 2 mit dem Druckzufuhranschluss 1 und dessen Auslass 9.3 mit einem Arbeitsanschluss 28 der Steuereinrichtung 11 verbunden ist. Weiterhin ist das Relaisventil auch mit einem Entlüftungsanschluss 32 verbunden.

Das Relaisventil 9 moduliert in bekannter Weise abhängig von dem an seinem Steueranschluss 9.1 anstehenden Druck aus dem am Druckmittelzufuhranschluss 1 anstehenden Vorratsdruck des Vorratsdruckbehälters einen Druck für den Arbeitsanschluss 28 der Steuereinrichtung 11 und damit für die Federspeicherbremse des Zugfahrzeugs. Diese Feststellbremse beinhaltet eingangs beschriebene Federspeicherbremszylinder, welche in belüftetem Zustand lösen und in entlüftetem Zustand zuspannen.

Das Bistabilventil 5 ist bevorzugt als ein von einem Elektromotor M betätigtes Ventil ausgeführt, wobei der Elektromotor M einen Mutter-Spindel-Trieb betätigt, welcher wiederum ein Ventilglied des Bistabilventils 5 betätigt. Bezüglich einer solchen Ausführung des Bistabilventils wird auf die DE 10 2009 016 981 A1 der Anmelderin der vorliegenden Patentanmeldung verwiesen, deren Inhalt hier vollumfänglich aufgenommen wird.

Alternativ könnte das Bistabilventil auch als ein von zwei Elektromagneten betätigtes elektromagnetisches Ventil ausgebildet sein, wovon ein Elektromagnet das Bistabilventil 5 bei Bestromung in die eine Schaltstellung und der andere Elektromagnet bei Bestromung in die andere Schaltstellung schaltet, hat die Eigenschaft, im unbestromten Zustand keine bevorzugte Schaltstellung einzunehmen, sondern die durch entsprechende vorangegangene Bestromung hervorgegangene Schaltstellung beizubehalten. Dadurch wird sichergestellt, dass sich die zuletzt eingenommene Schaltstellung des Bistabilventils 5 auch bei Störung der Stromversorgung oder Steuerungsfehlern nicht verändert. Das Bistabilventil kann generell auch elektro-pneumatisch, elektro-hydraulisch, elektro-motorisch oder elektro-magnetisch betätigbar sein. Wesentlich ist nur, dass es von der elektronischen Steuereinheit 10 elektrisch steuerbar ist.

Ausgangsseitig der dem Bistabilventil 5 vorgeordneten Ventileinrichtung 3 bzw. eingangseitig des Bistabilventils 5 ist weiterhin ein Drucksensor 4 angeordnet, der den in Bezug zur Ventileinrichtung 3 den ausgangsseitigen Druck bzw. Druck am Einlass 5.1 des Bistabilventils 5 misst und als elektrisches Signal an die Steuereinheit 10 meldet.

Andererseits steht der Auslass 5.2 des Bistabilventils 5 mit einem zweiten Anschluss 7.2 einer Ventileinrichtung 7 in Verbindung, welche beispielsweise ebenfalls als von der Steuereinheit 10 elektrisch steuerbares 3/2-Wege-Magnetventil ausgeführt ist. Dabei steht ein erster Anschluss 7.1 der Ventileinrichtung 7 mit dem Einlass des Bistabilventils 5 in Verbindung und ein dritter Anschluss 7.3 mit einem anderen Anschluss 29.2 für ein Anhängersteuerventil eines Anhängers.

Generell steuert eine Anhängersteuerventileinrichtung die Betriebsbremseinrichtung eines Anhängers an, welche eingangs beschriebene Betriebsbremszylinder umfasst, die in belüftetem Zustand zuspannen und in entlüftetem Zustand lösen. Weiterhin invertieren solche Anhängersteuerventileinrichtungen den in sie über die Anschlüsse 29.1 und 29.2 eingesteuerten Druck, d.h. sie invertieren einen einer Belüftung entsprechenden Druck in einen einer Entlüftung entsprechenden Druck und umgekehrt. Das Anhängersteuerventil des Anhängers ist wahlweise entweder an dem einen Anschluss 29.1 oder an dem anderen Anschluss 29.2 angeschlossen, je nachdem ob der am Zugfahrzeugangekoppelte Anhänger im Parkzustand der Zugfahrzeug-Anhängerkombination gebremst oder ungebremst sein soll. Hierauf wird später noch eingegangen.

Der Drucksensor 24 meldet auch das Druckniveau an den Anschlüssen 29.1 und 29.2, welche die Betriebsbremsen des Anhängers ansteuern an die elektronische Steuereinheit 10, welche über den Bedienhebel des Feststellbremssignalgebers ein beispielsweise gestuftes Bremsanforderungssignal empfangen kann, um beispielsweise durch Taktung der Ventileinrichtung 3 an den Anschlüssen 29.1 und 29.2 auf einen Solldruck einzuregeln.

Die Steuereinrichtung 11 ist bevorzugt als Baueinheit ausgeführt, in welcher wenigstens die dem Bistabilventil 5 vorgeordnete Ventileinrichtung 3, das Bistabilventil 5, die Ventileinrichtung 7, die Steuereinheit 10, der Druckluftzufuhranschluss 1, der eine Anschluss 29.1, der andere Anschluss 29.2, der Arbeitsanschluss 28 und die Druckverbindung 6 sowie notwendige pneumatische und elektrische Verbindungen dieser Komponenten integriert sind. Eneso ist auch der Drucksensor 4 bevorzugt dort integriert.

Vor diesem Hintergrund ist die Funktionsweise der Steuereinrichtung 11 wie folgt:
Den Betriebsmodus "Fahren" bzw. den Fahrzustands der Zugfahrzeug-Anhängerkombination stellt der Fahrer zunächst am Bedienhebel des Feststellbremssignalgebers ein. Dann steuert die Steuereinheit zum Herbeiführen des Fahrzustands die dem Bistabilventil 5 vorgeordnete Ventileinrichtung 3 derart, dass der Einlass 5.1 des Bistabilventils 5 belüftet wird, d.h., dass das Einlassventil 3.2 in seine Durchlassstellung und das Auslassventil 3.1 in seine Sperrstellung geschaltet wird. Das Bistabilventil 5 wird gleichzeitig in die Schaltstellung geschaltet, in der sein Einlass 5.1 mit seinem Auslass 5.2 verbunden ist und die Ventileinrichtung 7, dass deren dritter Anschluss 7.3 mit deren erstem Anschluss 7.1 und damit der andere Anschluss 29.2 mit dem Auslass 5.2 des Bistabilventils 5 verbunden ist. Somit wird werden sowohl der eine Anschluss 29.1, der andere Anschluss 29.2 sowie der Arbeitsanschluss 28 belüftet, um die durch Invertierung durch das entweder am einen Anschluss 29.1 oder am anderen Anschluss 29.2 angeschlossene Anhängersteuerventil die Betriebsbremsen des Anhängers zum Lösen zu entlüften und um gleichzeitig die Federspeicherbremse des Zugfahrzeugs zum Lösen zu belüften.

Wenn dann die Zugfahrzeug-Anhängerkombination durch Betätigen der fußpedalgesteuerten Betriebsbremse in den Stillstand eingebremst wurde, stellt der Fahrer zum Herbeiführen des Parkzustands den Bedienhebel des Feststellbremssignalgebers entsprechend ein. Dabei steuert die Steuereinheit 10 die dem Bistabilventil 5 vorgeordnete Ventileinrichtung 3 derart, dass der Einlass 5.1 des Bistabilventils 5 belüftet wird, wobei die Schaltstellungen der Ventile 3.1 und 3.2 dann wie oben beim Fahrzustand beschrieben sind. Dann wird der eine Anschluss 29.1 für das Anhängersteuerventil belüftet.

Im Gegensatz zum Fahrzustand wird jedoch das Bistabilventil 5 von der Steuereinheit 10 derart gesteuert, dass sein Auslass 5.2 mit der Drucksenke 5.3 verbunden ist. Dadurch wird der pneumatische Steuereingang 9.1 des Relaisventils 9 entlüftet, was zu einer Drucksenkung am Arbeitsanschluss 28 und damit zu einem Zuspannen der Federspeicherbremszylinder des Zugfahrzeugs führt. Die Ventileinrichtung 7 wird in die Schaltstellung gebracht, in der andere Anschluss 29.2 mit dem nun entlüfteten Auslass 5.2 des Bistabilventils 5 verbunden ist, d.h., dass sein dritter Anschluss 7.3 auf den zweiten Anschluss 7.2 geschaltet wird. Dann wird der andere Anschluss 29.2 für das Anhängersteuerventil entlüftet.

Somit werden im Parkzustand die beiden Anschlüsse 29.1 und 29.2 gegenläufig be- bzw. entlüftet. Je nachdem, an welchem Anschluss das Anhängersteuerventil des Anhängers dann angeschlossen ist, ergibt sich im Parkzustand der Zugfahrzeug-Anhängerkombination ein über die gelösten Betriebsbremsen ungebremster Anhänger oder ein über die zugespannten Betriebsbremsen eingebremster Anhänger.

Nicht zuletzt umfasst die Funktionalität der Steuereinrichtung 11 auch einen Testzustand, bei welchem überprüft wird, ob die Zugfahrzeug-Anhängerkombination bei über die Feststellbremse eingebremstem Zugfahrzeug und bei angekoppeltem, aber ungebremsten Anhänger im Stillstand gehalten werden kann. Hierzu wird die dem Bistabilventil 5 vorgeordnete Ventileinrichtung 3 wie oben angesteuert, um den Einlass 5.1 des Bistabilventils 5 zu belüften. Weiterhin wird das Bistabilventil 5 wie beim Parkzustand in seine Entlüftungsstellung geschaltet, damit sein Auslass 5.2 mit der Drucksenke 5.3 verbunden wird, um den pneumatischen Steuereingang 9.1 des Relaisventils 9 und damit den Arbeitsanschluss 28 zu entlüften, damit die Federspeicherbremse des Zugfahrzeugs zuspannen kann.

Über den belüfteten Einlass 5.1 des Bistabilventils 5 wird zugleich der eine Anschluss 29.1 für das Anhängersteuerventil belüftet. Falls daher das Anhängersteuerventil des Anhängersan diesen Anschluss 29.1 angeschlossen ist, so werden durch die Invertierung die Betriebsbremsen des Anhängers entlüftet und damit gelöst.

Um auch den anderen Anschluss 29.2 zu diesem Zweck zu belüften, d.h. damit das Anhängersteuerventil auch an diesen Anschluss angeschlossen und neben dem oben beschriebenen Parkzustand dann auch der Testzustand herbei geführt werden kann, wird die Ventileinrichtung 7 derart geschaltet, dass der andere Anschluss 29.2 mit dem Einlass 5.1 des Bistabilventils verbunden ist. Hierzu wird dann der dritte Anschluss 7.3 auf den ersten Anschluss 7.1 geschaltet. Somit sind im Testzustand der eine Anschluss 29.1 wie auch der andere Anschluss 29.2 belüftet und der Arbeitsanschluss 28 entlüftet.

Eine alternative Ausgestaltung der Ventileinrichtung 7' ist in Fig.2 dargstellt, bei welcher gegenüber dem vorangehend beschriebenen Ausführungsbeispiel der Steuereinrichtung 11 gleich bleibende und gleich wirkenden Bauteile und Baugruppen mit den gleichen Bezugszeichen versehen sind. Im Unterschied dazu wird die Ventileinrichtung 7' durch ein von der Steuereinheit 10 elektrisch steuerbares 3/2-Wege-Magnetventil 7.1' und durch ein Wechselventil 7.2' gebildet wird, wobei von dem 3/2-Wege-Magnetventil 7.1' ein erster Anschluss 7.11' mit dem Einlass 5.1 des Bistabilventils 5 und mit dem einen Anschluss 29.1, ein zweiter Anschluss 7.12' mit einer Drucksenke und ein dritter Anschluss 7.13' mit einem Eingang 7.21' des Wechselventils 7.2' verbunden ist, dessen weiterer Eingang 7.22' mit dem Auslass 5.2 des Bistabilventils 5 und dessen Ausgang 7.23' mit dem weiteren Anschluss 29.2 verbunden ist. Mithin ist der weitere Eingang 7.22' mit der Druckverbindung 6 verbunden.

Zum Fahren (Fahrzustand) werden die Ventileinrichtung 3 und das Bistabilventil 5 wie beim vorangehenden Ausführungsbeispiel beschrieben geschaltet. Dann sind der eine Anschluss 29.1 sowie der Arbeitsanschluss 28 belüftet und damit die Federspeicherbremse des Zugfahrzeugs gelöst und ein eventuell an den einen Anschluss 29.1 angeschlossnes Anhängersteuerventil belüftet, was ein Lösen der Betriebsbremse des Anhängers zur Folge hat. Bei der Ventileinrichtung 7' wird bei dem 3/2-Wege-Magnetventil 7.1' der dritte Anschluss 7.13' mit dem ersten Anschluss 7.11' verbunden (Belüftungsstellung). Dann wird der Eingang 7.21' des Wechselventils 7.2' über den dem Bistabilventil 5 vorgeordneten Zweig belüftet. Andererseits wird auch der andere Eingang 7.22' des Wechselventils 7.2' über die belüftete Druckverbindung 6 belüftet, wobei sich der größere Druck durchsetzt (select high) und über den Ausgang 7.23' an den anderen Anschluss 29.2 weiter gesteuert wird, um diesen zu belüften. Falls daher das Anhängersteuerventil an dem anderen Anschluss 29.2 angeschlossen sein sollte, so wird dieses dadurch belüftet, wodurch die Betriebsbremsen des Anhängers lösen.

Zum Herbeiführen des Parkzustands werden die Ventileinrichtung 3 und das Bistabilventil 5 wie beim vorangehenden Ausführungsbeispiel beschrieben geschaltet. Dabei steuert die Steuereinheit 10 die dem Bistabilventil 5 vorgeordnete Ventileinrichtung 3 derart, dass der Einlass 5.1 des Bistabilventils 5 belüftet wird. Dann wird der eine Anschluss 29.1 für das Anhängersteuerventil belüftet.

Weiterhin wird das Bistabilventil 5 von der Steuereinheit 10 derart gesteuert, dass sein Auslass 5.2 mit der Drucksenke 5.3 verbunden ist. Dadurch wird der pneumatische Steuereingang 9.1 des Relaisventils 9 entlüftet, was zu einer Drucksenkung am Arbeitsanschluss 28 und damit zu einem Zuspannen der Federspeicherbremszylinder des Zugfahrzeugs führt. Zusätzlich wird das 3/2-Wege-Magnetventil 7.1' in seine Entlüftungsstellung geschaltet, in der der dritte Anschluss 7.13' mit der Entlüftung am zweiten Anschluss 7.12' verbunden und der erste Anschluss 7.11' gesperrt ist, damit der eine Eingang 7.21' des Wechselventils 7.2' entlüftet wird. Andererseits ist auch der andere Eingang 7.22' des Wechselventils 7.2' entlüftet, weil der Auslass 5.2 des Bistabilventils 5 über die Drucksenke 5.3 entlüftet wird. Somit stellt das an seinen beiden Eingängen 7.21' und 7.22' entlüftete Wechselventil 7.2' an seinem Ausgang 7.23' in jedem Fall einen Entlüftungsdruck ein, der an den Anschluss 29.2 weiter gesteuert wird, wodurch der andere Anschluss 29.2 entlüftet wird, im Gegensatz zu dem belüfteten einen Anschluss 29.1. Dadurch wird wiederum die gegenläufige Be- und Entlüftung der Anschlüsse 29.1 und 29.2 im Parkzustand sichergestellt,

Zum Herbeiführen des Testzustands wird die dem Bistabilventil 5 vorgeordnete Ventileinrichtung 3 angesteuert, um den Einlass 5.1 des Bistabilventils 5 zu belüften. Weiterhin wird das Bistabilventil 5 wie beim Parkzustand in seine Entlüftungsstellung geschaltet, damit sein Auslass 5.2 mit der Drucksenke 5.3 verbunden wird, um den pneumatischen Steuereingang 9.1 des Relaisventils 9 und damit den Arbeitsanschluss 28 zu entlüften, damit die Federspeicherbremse des Zugfahrzeugs zuspannen kann.

Über den belüfteten Einlass 5.1 des Bistabilventils 5 wird zugleich der eine Anschluss 29.1 für das Anhängersteuerventil belüftet. Falls daher das Anhängersteuerventil des Anhängers an diesen Anschluss 29.1 angeschlossen ist, so werden durch die Invertierung die Betriebsbremsen des Anhängers entlüftet und damit gelöst.

Um auch den anderen Anschluss 29.2 zu diesem Zweck zu belüften, d.h. damit das Anhängersteuerventil auch an diesen Anschluss 29.2 angeschlossen und neben dem oben beschriebenen Parkzustand dann auch der Testzustand herbei geführt werden kann, wird das 3/2-Wege-Magnetventil 7.1' in Belüftungsstellung geschaltet, so dass sein erster Anschluss 7.11' mit dem dritten Anschluss 7.13' in Verbindung kommt. Dann ist der eine Eingang 7.21' des Wechselventils 7.2' belüftet. Da der andere Eingang 7.22' über den Auslass 5.2 bzw. die Drucksenke 5.3 des Bistabilventils entlüftet wird, schaltet das Wechselventil 7.2' den höheren Druck an seinem Eingang 7.21' an seinen Ausgang 7.23' weiter, um den anderen Anschluss 29.2 ebenfalls zu belüften. Gleichgültig, ob das Anhängersteuerventil daher an den einen Anschluss 29.1 oder an den anderen Anschluss 29.2 angeschlossen ist, wird dieses belüftet, um die Betriebsbremsen des Anhängers zu entlüften und damit zu lösen.

Eine hier nicht gezeigte alternative Ausführungsform der dem Bistabilventil 5 vorgeordneten Ventileinrichtung 3' könnte als 3/3-Wege-Magnetventil ausgeführt sein, mit einer Belüftungsstellung und einer Entlüftungsstellung zum Be- und Entlüften des Einlasses 5.1 des Bistabilventils 5 bzw. des einen Anschlusses 29.1.

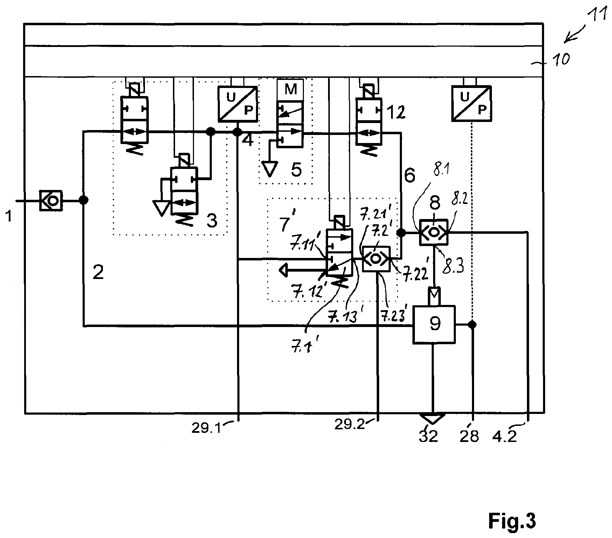

Bei der in Fig.3 gezeigten weiteren Ausführungsform sind gegenüber der in Fig.2 gezeigten Ausführungsform identische oder gleich wirkende Bauteile und Baugruppen mit den gleichen Bezugszahlen gekennzeichnet. Im Unterschied zum Ausführungsbeispiel von Fig.2 ist zum einen eine weitere Ventileinrichtung 12 in der Druckverbindung 6 zwischen dem Auslass 5.2 des Bistabilventils 5 und dem Steuereingang 9.1 des Relaisventils 9 bevorzugt in Form eines von der Steuereinrichtung 10 gesteuerten 2/2-Wege-Magnetventils vorgesehen. Dieses 2/2-Wege-Magnetventil 12 kann in seiner Sperrstellung die Druckverbindung 6 sperren und in seiner Öffnungsstellung die Druckverbindung 6 öffnen. Darüber hinaus ist ein weiteres Wechselventil 8 vorgesehen, dessen einer Eingang 8.1 mit dem der weiteren Ventileinrichtung 12 nachgeordneten Abschnitt der Druckverbindung 6 und dessen anderer Eingang 8.2 mit einem Steuereingang 4.2 der Steuereinrichtung 11 für Steuerdruck der Betriebsbremse verbunden ist. An diesem Steuereingang 4.2 liegt dann der Bremsdruck bzw. der Steuerdruck der fußbetätigten Betriebsbremse des Zugfahrzeugs an. Der Ausgang 8.3 des Wechselventils 8 ist mit dem Steuereingang 9.1 des Relaisventils 9 verbunden.

Das Wechselventil 8 als select-high-Ventil steuert dann den größeren der an seinen Eingängen 8.1, 8.2 anstehenden Druck an seinen Ausgang 8.3 und damit an den Steuereingang 9.1 des Relaisventils 9 aus. Funktional verhindert das Wechselventil 8 als anti-compound-Ventil, dass der Bremsmechanismus durch eine Addition von Feststellbremskraft und Betriebsbremskraft überlastet wird, indem es lediglich den größeren der beiden Bremsdrücke, nämlich den Feststellbremsdruck an selnem einen Eingang 8.1 und den Betriebsbremsdruck an seinem anderen Eingang 8.2 als Steuerdruck für das Relaisventil 9 weiter leitet.

Die weitere Ventileinrichtung 12 dient zur Ausführung einer Streckbremsfunktion, bei welcher durch selektives Bremsen des Anhängers und Lösen oder Gelösthalten der Bremsen des Zugfahrzeugs die Zugfahrzeug-AnhängerKombination im Einknickfall vom Fahrer gezielt wieder gestreckt werden kann. Hierzu wird das 2/2-Wege-Magnetventil von der Steuereinrichtung 10 aufgrund eines über den Bedienhebel des Feststellbremssignalgebers eingegebenen Steuerbefehl derart geschaltet, dass der Arbeitsanschluss 28 für die Federspeicherbremse des Zugfahrzeugs belüftet und damit die Federspeicherbremse gelöst gehalten wird. Demgegenüber müssen die Anschlüsse 29.1 und 29.2 entlüftet werden, um durch Invertierung die Betriebsbremsen des Anhängers belüften zu können. Diese weitere Ventileinrichtung 12 kann jedoch auch entfallen, damit die Druckverbindung 6 den Auslass 5.2 des Bistabilventils 5 direkt und ohne Zwischenordnung weiterer Ventile mit dem Steuereingang 9.1 des Relaisventils 9 verbinden kann. Insofern könnte das Wechselventil 8 auch in die Ausführungsformen nach Fig.1 und Fig.2 integriert sein.

### Bezugszahlenliste

- 1: Druckluftzufuhranschluss
- 2: Vorratsdruckleitung
- 3: Ventileinrichtung
- 3.1: Entlüftungsventil
- 3.11: Drucksenke
- 3.2: Belüftungsventil
- 4: Drucksensor
- 5: Bistabilventil
- 5.1: Einlass
- 5.2: Auslass
- 5.3: Drucksenke
- 6: Druckverbindung
- 7: Ventileinrichtung
- 7.1: erster Anschluss
- 7.2: zweiter Anschluss
- 7.3: dritter Anschluss
- 7': Ventileinrichtung
- 7.1': 3/2-Wege-Magnetventil
- 7.2': Wechselventil
- 7.11': erster Anschluss
- 7.12': zweiter Anschluss
- 7.13': dritter Anschluss
- 7.2': Wechselventil
- 7.21': Eingang
- 7.22': Eingang
- 7.23': Ausgang
- 8: Wechselventil
- 8.1: Eingang
- 8.2: Eingang
- 8.3: Ausgang
- 9: Relaisventil
- 9.1: Steuereingang
- 9.2: Eingang
- 9.3: Ausgang
- 10: Steuereinheit
- 11: Steuereinrichtung
- 12: Ventileinrichtung
- 28: Arbeitsanschluss
- 29.1: Anschluss
- 29.2: Anschluss
- 32: Entlüftungsanschluss

## Patentansprüche

1. Steuereinrichtung zur Steuerung zumindest der wenigstens einen Federspeicherbremszylinder umfassenden Feststellbremse eines Zugfahrzeugs einer Zugfahrzeug-Anhängerkombination und zur Steuerung der Betriebsbremse eines Anhängers der Zugfahrzeug-Anhängerkombination, beinhaltend wenigstens Folgendes:
a) einen Druckluftzufuhranschluss (1), der mit einem Druckluftvorratsbehälter verbindbar ist,
b) eine luftmengenverstärkende Ventileinrichtung (9), deren Einlass (9.2) mit dem Druckluftzufuhranschluss (1) und deren Auslass (9.3) mit einem Arbeitsanschluss (28) zu dem wenigstens einen Federspeicherbremszylinder verbindbar ist und die einen pneumatischen Steuereingang (9.1) zur Zufuhr eines Steuerdrucks zum Steuern des Drucks am Auslass (9.3) der luftmengenverstärkenden Ventileinrichtung (9) aufweist,
c) ein elektrisch betätigbares Bistabilventil (5) mit einem Einlass (5.1), der mit dem Druckluftzufuhranschluss (1) und mit einem Auslass (5.2) verbindbar ist, der mit dem Steuereingang (9.1) der luftmengenverstärkenden Ventileinrichtung (9) verbindbar ist, wobei sein Auslass (5.2) entweder mit seinem Einlass (5.1) oder mit einer Drucksenke (5.3) verbindbar ist,
d) eine elektronische Steuereinheit (10), mit der das Bistabilventil (5) elektrisch verbunden ist und das Bistabilventil (5) steuert,
e) wenigstens zwei be- oder entlüftbare Anschlüsse (29.1, 29.2) für eine die Betriebsbremsen des Anhängers steuernde Anhängersteuerventileinrichtung, wobei in einem Parkzustand des Fahrzeugs der eine Anschluss (29.1) der Anschlüsse (29.1, 29.2) belüftet und der andere Anschluss (29.2) der Anschlüsse (29.1, 29.2) entlüftet ist und dass in einem Fahrzustand des Fahrzeugs der eine Anschluss (29.1) und der andere Anschluss (29.2) belüftet ist, wobei
f) der Einlass (5.1) des Bistabilventils (5) mit dem einen Anschluss (29.1) verbunden ist,
**dadurch gekennzeichnet, dass**
g) der Auslass (5.2) des Bistabilventils (5) direkt und stets mit dem Steuereingang (9.1) der luftmengenverstärkenden Ventileinrichtung (9) verbunden ist, und
h) eine von der Steuereinheit (10) wenigstens teilweise elektrisch steuerbare Ventileinrichtung (7; 7') vorgesehen ist, welche derart ausgebildet ist, dass sie den anderen Anschluss (29.2) mit dem Einlass (5.1) oder mit dem Auslass (5.2) des Bistabilventils (5), oder alternativ mit einer Drucksenke (7.12') verbindet.

2. Steuereinrichtung nach Anspruch 1,
**dadurch gekennzeichnet, dass**
weiterhin eine von der Steuereinheit (10) elektrisch steuerbare, dem Bistabilventil (5) vorgeordnete Ventileinrichtung (3) vorgesehen ist, welche einerseits mit dem Druckluftzufuhranschluss (1) und andererseits mit dem Einlass (5.1) des Bistabilventils verbunden ist und welche
a) den Einlass (5.1) des Bistabilventils (5) mit einer Drucksenke (3.11) oder mit dem Druckluftzufuhranschluss (1) verbindet, oder
b) den Einlass (5.1) des Bistabilventils (5) des Bistabilventils (5) mit einer Drucksenke (3.11) oder mit dem Druckluftzufuhranschluss (1) verbindet oder den Einlass (5.2) gegenüber dem Druckluftzufuhranschluss (1) sperrt.

3. Steuereinrichtung nach Anspruch 2,
**dadurch gekennzeichnet, dass**
die vorgeordnete Ventileinrichtung (3) ein 3/2-Wege-Magnetventil oder zwei 2/2-Wege-Magnetventile (3.1, 3.2) beinhaltet.

4. Steuereinrichtung nach Anspruch 2 oder 3,
**dadurch gekennzeichnet, dass**
die Steuereinheit (10) zum Herbeiführen des Fahrzustands
a) die dem Bistabilventil (5) vorgeordnete Ventileinrichtung (3) derart steuert, dass der Einlass (5.1) des Bistabilventils (5) belüftet ist,
b) das Bistabilventil (5) derart steuert, dass sein Einlass (5.1) mit seinem Auslass (5.2) verbunden ist,
c) die Ventileinrichtung (7; 7') derart steuert, dass der andere Anschluss (29.2) mit dem Auslass (5.2) des Bistabilventils (5)verbunden ist,
d) um den einen Anschluss (29.1) und den anderen Anschluss (29.2) sowie den Arbeitsanschluss (28) zu belüften.

5. Steuereinrichtung nach einem der Ansprüche 2 bis 4,
**dadurch gekennzeichnet, dass**
die Steuereinheit (10) zum Herbeiführen des Parkzustands
a) die dem Bistabilventil (5) vorgeordnete Ventileinrichtung (3) derart steuert, dass der Einlass (5.1) des Bistabilventils (5) belüftet ist,
b) das Bistabilventil (5) derart steuert, dass sein Auslass (5.2) mit der Drucksenke (5.3) verbunden ist,
c) die Ventileinrichtung (7; 7') derart steuert, dass der andere Anschluss (29.2) mit dem Auslass (5.2) des Bistabilventils (5) verbunden ist,
d) um den einen Anschluss (29.1) zu belüften und den anderen Anschluss (29.2) sowie den Arbeitsanschluss (28) zu entlüften.

6. Steuereinrichtung nach einem der Ansprüche 2 bis 5,
**dadurch gekennzeichnet, dass**
die Steuereinheit (10) zum Herbeiführen eines Testzustands, in dem überprüft wird, ob die Zugfahrzeug-Anhängerkombination bei über die Feststellbremse eingebremstem Zugfahrzeug und bei ungebremsten Anhänger im eingebremsten Zustand gehalten werden kann
a) die dem Bistabilventil (5) vorgeordnete Ventileinrichtung (3) derart steuert, dass der Einlass (5.1) des Bistabilventils (5) belüftet ist,
b) das Bistabilventil (5) derart steuert, dass sein Auslass (5.2) mit der Drucksenke (5.3) verbunden ist,
c) die Ventileinrichtung (7) derart steuert, dass der andere Anschluss (29.1) mit dem Einlass (5.1) des Bistabilventils (5) verbunden ist,
d) um den einen Anschluss (29.1) und den anderen Anschluss (29.2) zu belüften sowie den Arbeitsanschluss (28) zu entlüften.

7. Steuereinrichtung nach einem der vorhergehenden Ansprüche,
**dadurch gekennzeichnet, dass**
die Ventileinrichtung (7) durch ein von der Steuereinrichtung elektrisch steuerbares 3/2-Wege-Magnetventil gebildet wird, von welchem ein erster Anschluss (7.1) mit dem Einlass (5.1) des Bistabilventils (5) und mit dem einen Anschluss (29.1), ein zweiter Anschluss (7.2) mit dem Auslass (5.2) des Bistabilventils (5) und ein dritter Anschluss (7.3) mit dem weiteren Anschluss (29.2) verbunden ist.

8. Steuereinrichtung nach einem der Ansprüche 1 bis 7,
**dadurch gekennzeichnet, dass**
die Ventileinrichtung (7') durch ein von der Steuereinheit (10) elektrisch steuerbares 3/2-Wege-Magnetventil (7.1') und durch ein Wechselventil (7.2') gebildet wird, wobei von dem 3/2-Wege-Magnetventil (7.1') ein erster Anschluss (7.11') mit dem Einlass (5.1) des Bistabilventils (5) und mit dem einen Anschluss (29.1), ein zweiter Anschluss (7.12') mit einer Drucksenke und ein dritter Anschluss (7.13') mit einem Eingang (7.21') des Wechselventils (7.2') verbunden ist, dessen weiterer Eingang (7.22') mit dem Auslass (5.2) des Bistabilventils (5) und dessen Ausgang (7.23') mit dem weiteren Anschluss (29.2) verbunden ist.

9. Steuereinrichtung nach einem der vorhergehenden Ansprüche,
**dadurch gekennzeichnet, dass**
die luftmengenverstärkende Ventileinrichtung (9) wenigstens ein Relaisventil beinhaltet.

10. Steuereinrichtung nach einem der vorhergehenden Ansprüche,
**dadurch gekennzeichnet, dass**
das Bistabilventil (5) elektro-pneumatisch, elektro-hydraulisch, elektro-motorisch oder elektro-magnetisch betätigbar ist.

11. Steuereinrichtung nach einem der vorhergehenden Ansprüche,
**dadurch gekennzeichnet, dass**
sie als Baueinheit ausgeführt ist, in welcher wenigstens die dem Bistabilventil (5) vorgeordnete Ventileinrichtung (3), das Bistabilventil (5), die Ventileinrichtung (7), die luftmengenverstärkende Ventileinrichtung (9), die Steuereinrichtung (10), der Druckluftzufuhranschluss (1), der eine Anschluss (29.1), der andere Anschluss (29.2), der Arbeitsanschluss (18) und die Druckverbindung (6) sowie pneumatische und elektrische Verbindungen integriert sind.

12. Steuereinrichtung nach einem der vorhergehenden Ansprüche,
**dadurch gekennzeichnet, dass**
der Auslass (5.2) des Bistabilventils (5) über eine direkte Druckverbindung (6) und ohne Zwischenordnung eines oder mehrerer Ventile mit dem Steuereingang (9.1) der luftmengenverstärkenden Ventileinrichtung (9) verbunden ist.

13. Elektro-pneumatische Bremseinrichtung eines Zugfahrzeugs einer Zugfahrzeug-Anhängerkombination, beinhaltend eine Steuereinrichtung nach einem der vorhergehenden Ansprüche.

## Claims

1. Control device for controlling at least the parking brake of a towing vehicle of a towing vehicle/trailer combination, said parking brake comprising at least one spring brake cylinder, and for controlling the service brake of a trailer of the towing vehicle/trailer combination, containing at least the following:
a) a compressed air supply port (1) which can be connected to a compressed air storage reservoir,
b) an air quantity boosting valve device (9), the inlet (9.2) of which can be connected to the compressed air supply port (1) and the outlet (9.3) of which can be connected to a working port (28) to the at least one spring brake cylinder, and which has a pneumatic control input (9.1) for supplying a control pressure for controlling the pressure at the outlet (9.3) of the air quantity boosting valve device (9),
c) an electrically actuatable bistable valve (5) with an inlet (5.1) which can be connected to the compressed air supply port (1) and to an outlet (5.2) which can be connected to the control input (9.1) of the air quantity boost valve device (9), wherein the outlet (5.2) can be connected either to its inlet (5.1) or to a pressure sink (5.3),
d) an electronic control unit (10) which is electrically connected to the bistable valve (5) and which controls the bistable valve (5),
e) at least two ventilatable or evacuatable ports (29.1, 29.2) for a trailer control valve device controlling the service brakes of the trailer, wherein in parked state of the vehicle, the one port (29.1) of the ports (29.1, 29.2) is ventilated and the other port (29.2) of the ports (29.1, 29.2) is evacuated, and that in a driving state of the vehicle the one port (29.1) and the other port (29.2) are ventilated, wherein
f) the inlet (5.1) of the bistable valve (5) is connected to the one port (29.1),
**characterized in that**
g) the outlet (5.2) of the bistable valve (5) is always directly connected to the control input (9.1) of the air quantity boosting valve device (9), and
h) a valve device (7; 7') is provided which can be at least partly controlled electrically by the control unit (10) and is configured such that it connects the other port (29.2) to the inlet (5.1) or to the outlet (5.2) of the bistable valve (5), or alternatively to a pressure sink (7.12').

2. Control device according to Claim 1, **characterized in that** furthermore a valve device (3) is provided which can be controlled electrically by the control unit (10) and is arranged upstream of the bistable valve (5) and which is connected firstly to the compressed air supply port (1) and secondly to the inlet (5.1) of the bistable valve, and which
a) connects the inlet (5.1) of the bistable valve (5) to a pressure sink (3.11) or to the compressed air supply port (1), or
b) connects the inlet (5.1) of the bistable valve (5) to a pressure sink (3.11) or to the compressed air supply port (1) or blocks the inlet (5.2) against the compressed air supply port (1).

3. Control device according to Claim 2, **characterized in that** the upstream valve device (3) contains a 3/2-way solenoid valve or two 2/2-way solenoid valves (3.1, 3.2).

4. Control device according to Claim 2 or 3, **characterized in that** the control unit (10), in order to establish the driving state,
a) controls the valve device (3) upstream of the bistable valve (5) such that the inlet (5.1) of the bistable valve (5) is ventilated,
b) controls the bistable valve (5) such that its inlet (5.1) is connected to its outlet (5.2),
c) controls the valve device (7; 7') such that the other port (29.2) is connected to the outlet (5.2) of the bistable valve (5),
d) in order to ventilate the one port (29.1) and the other port (29.2) and the working port (28).

5. Control device according to any of Claims 2 to 4, **characterized in that** the control unit (10), in order to establish the parked state,
a) controls the valve device (3) upstream of the bistable valve (5) such that the inlet (5.1) of the bistable valve (5) is ventilated,
b) controls the bistable valve (5) such that its outlet (5.2) is connected to the pressure sink (5.3),
c) controls the valve device (7; 7') such that the other port (29.2) is connected to the outlet (5.2) of the bistable valve (5),
d) in order to ventilate the one port (29.1) and evacuate the other port (29.2) and the working port (28).

6. Control device according to any of Claims 2 to 5, **characterized in that** the control unit (10), in order to establish a test state in which it is checked whether the towing vehicle/trailer combination can be held in braked state when the towing vehicle is braked by the parking brake and the trailer is not braked,
a) controls the valve device (3) upstream of the bistable valve (5) such that the inlet (5.1) of the bistable valve (5) is ventilated,
b) controls the bistable valve (5) such that its outlet (5.2) is connected to the pressure sink (5.3),
c) controls the valve device (7) such that the other port (29.2) is connected to the inlet (5.1) of the bistable valve (5),
d) in order to ventilate the one port (29.1) and the other port (29.2) and evacuate the working port (28).

7. Control device according to any preceding claims, **characterized in that** the valve device (7) is formed from a 3/2-way solenoid valve which can be controlled electrically by the control device, and of which a first port (7.1) is connected to the inlet (5.1) of the bistable valve (5) and to the one port (29.1), a second port (7.2) is connected to the outlet (5.2) of the bistable valve (5), and a third port (7.3) is connected to the further port (29.2).

8. Control device according to any of Claims 1 to 7, **characterized in that** the valve device (7') is formed from a 3/2-way solenoid valve (7.1') which can be controlled electrically by the control unit (10), and from a changeover valve (7.2'), wherein of the 3/2-way solenoid valve (7.1'), a first port (7.11') is connected to the inlet (5.1) of the bistable valve (5) and to the one port (29.1), a second port (7.12') is connected to a pressure sink, and a third port (7.13') is connected to an input (7.21') of the changeover valve (7.2'), the further input (7.22') of which is connected to the outlet (5.2) of the bistable valve (5), and the output (7.23') of which is connected to the further port (29.2).

9. Control device according to any of the preceding claims, **characterized in that** the air quantity boosting valve device (9) contains at least one relay valve.

10. Control device according to any of the preceding claims, **characterized in that** the bistable valve (5) can be activated electropneumatically, electrohydraulically, by electric motor or electromagnetically.

11. Control device according to any of the preceding claims, **characterized in that** it is configured as a component which integrates at least the valve device (3) upstream of the bistable valve (5), the bistable valve (5), the valve device (7), the air quantity boosting valve device (9), the control unit (10), the compressed air supply port (1), the one port (29.1), the other port (29.2), the working port (18), the pressure connection (6) and pneumatic and electrical connections.

12. Control device according to any of the preceding claims, **characterized in that** the outlet (5.2) of the bistable valve (5) is connected, via a direct pressure connection (6) and without the interposition of one or more valves, to the control input (9.1) of the air quantity boosting valve device (9).

13. Electropneumatic braking device of a towing vehicle of a towing vehicle/trailer combination, containing a control device according to any of the preceding claims.

## Revendications

1. Dispositif de commande pour commander au moins le frein de stationnement, comprenant au moins un cylindre de frein à ressort accumulateur, d'un véhicule tracteur d'une combinaison véhicule tracteur-remorque et pour commander le frein de service d'une remorque de la combinaison véhicule tracteur-remorque, comportant au moins ce qui suit :
a) un raccord (1) d'amenée d'air comprimé, qui peut communiquer avec un réservoir d'air comprimé,
b) un dispositif (9) de soupape amplifiant la quantité d'air, dont l'entrée (9.2) peut communiquer avec le raccord (1) d'amenée d'air comprimé et dont la sortie (9.3) peut communiquer avec un raccord (28) de travail allant au au moins un cylindre de frein à ressort accumulateur et qui a une entrée (9.1) pneumatique de commande pour l'amenée d'une pression de commande pour commander la pression à la sortie (9.3) du dispositif (9) de soupape amplifiant la quantité d'air,
c) une soupape (5) bistable à actionnement électrique, comprenant une entrée (5.1), qui peut communiquer avec le raccord (1) d'amenée d'air comprimé et une sortie (5.2), qui peut communiquer avec l'entrée (9.1) de commande du dispositif (9) de soupape amplifiant la quantité d'air, sa sortie (5.2) pouvant communiquer soit avec son entrée (5.1), soit avec un puits (5.3) de pression,
d) une unité (10) électronique de commande à laquelle la soupape (5) bistable est reliée électriquement et qui commande la soupape (5) bistable,
e) au moins deux raccords (29.1, 29.2), pouvant être alimentés en air ou purgés, pour un dispositif de soupape de commande de remorque commandant les freins de service de la remorque, dans lequel, dans un état de stationnement du véhicule, le un raccord (29.1) des raccords (29.1, 29.2) est alimenté en air et l'autre raccord (29.2) des raccords (29.1, 29.2) est purgé et en ce que, dans un état de marche du véhicule, le un raccord (29.1) et l'autre raccord (29.2) sont alimentés en air, dans lequel
f) l'entrée (5.1) de la soupape (5) bistable communique avec le un raccord (29.1), **caractérisé en ce que**
g) la sortie (5.2) de la soupape (5) bistable communique directement et constamment avec l'entrée (9.1) de commande du dispositif (9) de soupape amplifiant la quantité d'air et
h) il est prévu un dispositif (7 ; 7') de soupape pouvant être commandé, au moins en partie, électriquement par l'unité (10) de commande et constitué de manière à mettre l'autre raccord (29.2) en communication avec l'entrée (5.1) ou avec la sortie (5.2) de la soupape (5) bistable ou alternativement avec un puits (7.12') de pression.

2. Dispositif de commande suivant la revendication 1, **caractérisé en outre en ce qu'**il est prévu un dispositif (3) de soupape, qui peut être commandé électriquement par l'unité (10) de commande, qui est disposé avant la soupape (5) bistable, qui communique d'une part avec le raccord (1) d'amenée d'air comprimé et d'autre part avec l'entrée (5.1) de la soupape bistable et qui
a) met l'entrée (5.1) de la soupape (5) bistable en communication avec puits (3.11) de pression ou avec le raccord (1) d'amenée d'air comprimé ou
b) met l'entrée (5.1) de la soupape (5) bistable en communication avec un puits (3.11) de pression ou avec le raccord (1) d'amenée d'air comprimé ou obture l'entrée (5.2) par rapport au raccord (1) d'amenée d'air comprimé.

3. Dispositif de commande suivant la revendication 2, **caractérisé en ce que** le dispositif (3) de soupape monté avant comporte une électrovanne à 3/2 voies ou deux électrovannes (3.1, 3.2) à 2/2 voies.

4. Dispositif de commande suivant la revendication 2 ou 3, **caractérisé en ce que**, pour amener à l'état de marche, l'unité (10) de commande
a) commande le dispositif (5) de soupape monté avant la soupape (5) bistable, de manière à ce que l'entrée (5.1) de la soupape (5) bistable soit alimentée en air,
b) commande la soupape (5) bistable, de manière que son entrée (5.1) communique avec sa sortie (5.2),
c) commande le dispositif (7 ; 7') de soupape, de manière à ce que l'autre raccord (29.2) communique avec la sortie (5.2) de la soupape (5) bistable,
d) pour alimenter en air un raccord (29.1) et l'autre raccord (29.2) ainsi que le raccord (28) de travail.

5. Dispositif de commande suivant l'une des revendications 2 à 4, **caractérisé en ce que**, pour amener à l'état de stationnement, l'unité (10) de commande
a) commande le dispositif (3) de soupape monté avant la soupape (5) bistable, de manière à ce que l'entrée (5.1) de la soupape (5) bistable soit alimentée en air,
b) commande la soupape (5) bistable, de manière à ce que sa sortie (5.2) communique avec le puits (5.3) de pression
c) commande le dispositif (7 ; 7') de soupape, de manière à ce que l'autre raccord (29.2) communique avec la sortie (5.2) de la soupape (5) bistable,
d) pour alimenter en air le un raccord (29.1) et pour purger l'autre raccord (29.2) ainsi que le raccord (28) de travail.

6. Dispositif de commande suivant l'une des revendications 2 à 5, **caractérisé en ce que** l'unité (10) de commande, pour amener à un état de test dans lequel il est contrôlé si la combinaison véhicule tracteur-remorque peut, alors que le véhicule tracteur est freiné par le frein de stationnement et alors que la remorque n'est pas freinée, être maintenue dans un état freiné,
a) commande le dispositif (3) de soupape monté avant la soupape (5) bistable, de manière à ce que l'entrée (5.1) de la soupape (5) bistable soit alimentée en air,
b) commande la soupape (5) bistable, de manière à ce que sa sortie (5.2) communique avec le puits (5.3) de pression,
c) commande le dispositif (7) de soupape, de manière à ce que l'autre raccord (29.1) communique avec l'entrée (5.1) de la soupape (5) bistable,
d) pour alimenter en air le un raccord (29.1) et l'autre raccord (29.2) ainsi que pour purger le raccord (28) de travail.

7. Dispositif de commande suivant l'une des revendications précédentes, **caractérisé en ce que** le dispositif (7) de soupape est formé par une électrovanne à 3/2 voies, qui peut être commandée électriquement par le dispositif de commande et par laquelle un premier raccord (7.1) communique avec l'entrée (5.1) de la soupape (5) bistable avec le un raccord (29.1), un deuxième raccord (7.2) avec la sortie (5.2) de la soupape (5) bistable et un troisième raccord (7.3) avec l'autre raccord (29.2).

8. Dispositif de commande suivant l'une des revendications 1 à 7, **caractérisé en ce que** le dispositif (7) de soupape est formé d'une électrovanne (7.1') à 3/2 voies, pouvant être commandée électriquement par l'unité (10) de commande et d'une soupape (7.2') à deux voies, dans lequel, par l'électrovanne (7.1') à 3/2 voies, un premier raccord (7.11') communique avec l'entrée (5.1) de la soupape (5) bistable et avec un raccord (29.1), un deuxième raccord (7.12') avec un puits de pression et un troisième raccord (7.13') avec une entrée (7.21') de la soupape (7.2') à deux voies dont l'autre entrée (7.22') communique avec la sortie (5.2) de soupape (5) bistable et dont la sortie (7.23') communique avec l'autre raccord (29.2).

9. Dispositif de commande suivant l'une des revendications précédentes, **caractérisé en ce que** le dispositif (9) de soupape amplifiant la quantité d'air comporte au moins une soupape relais.

10. Dispositif de commande suivant l'une des revendications précédentes, **caractérisé en ce que** la soupape (5) bistable peut être actionnée électropneumatiquement, électrohydrauliquement, par un moteur électrique ou électromagnétiquement.

11. Dispositif de commande suivant l'une des revendications précédentes, **caractérisé en ce qu'**il est réalisé sous la forme d'une unité de construction dans laquelle sont intégrés au moins le dispositif (3) de soupape monté avant la soupape (5) bistable, la soupape (5) bistable, le dispositif (7) de soupape, le dispositif (9) de soupape amplifiant la quantité d'air, le dispositif (10) de commande, le raccord (1) d'amenée d'air comprimé, le un raccord (29.1), l'autre raccord (29.2), le raccord (18) de travail et la liaison (6) de pression ainsi que des liaisons pneumatiques et électriques.

12. Dispositif de commande suivant l'une des revendications précédentes, **caractérisé en ce que** la sortie (5.2) de la soupape (5) bistable communique, par une liaison (6) de pression directe et sans interposition d'une ou de plusieurs soupapes, avec l'entrée (9.1) de commande du dispositif (9) de soupape amplifiant la quantité d'air.

13. Dispositif de frein électropneumatique d'un véhicule tracteur d'une combinaison véhicule tracteur-remorque comportant un dispositif de commande suivant l'une des revendications précédentes.
